# EUROPEAN PATENT SPECIFICATION

(11) **EP 0 507 936 B1**
(45) Date of publication and mention of the grant of the patent: **10.01.1996**
(21) Application number: 92900075.0
(22) Date of filing: 22.10.1991
(51) Int. Cl.: H04N 1/036

(54) **MULTICHANNEL OPTICAL PRINTHEAD**
OPTISCHER VIELKANAL-DRUCKKOPF
TETE D'IMPRESSION OPTIQUE MULTICANAL

(30) Priority: 26.10.1990 US 603356
(43) Date of publication of application: 14.10.1992
(73) Proprietor: EASTMAN KODAK COMPANY, Rochester, New York 14650-2201 (US)
(72) Inventor: DEBESIS, John, R., Penfield, NY 14526 (US)
(74) Representative: Buff, Michel
(86) International application number: US9107661
(87) International publication number: WO9208313

(56) References cited:
- WO-A-90/04194
- WO-A-90/04195
- DE-C- 3 321 346
- US-A- 4 389 655
- Patent Abstracts of Japan, Vol 12, No 339, P757, abstract of JP 63- 98607, publ 1988-04-30 ASAHI GLASS CO LTD

## Description

### Technical Field

The present invention is directed to an optical printhead of the type that utilizes a plurality of light sources coupled to a corresponding plurality of optical fibers positioned to produce an array of light spots to record images and text onto a recording medium, and more particularly to an improved optical print head which closely positions the light spots for improving the resolution of recording.

### Background Art

Print heads of the type described are well known. For example, U.S. patent US-A- 4,389,655 describes various configurations of fiber optic print heads in which an in-line array of optical fibers are held in grooves etched into a silicon plate. Each optical fiber has an independently modulatable laser diode optically coupled to its input end and the head is positioned with the fiber output ends closely adjacent to the photoreceptor surface so that, as the head is translated along the surface, the several modulated light beams exiting the fibers simultaneously write a corresponding number of parallel image scan lines.

The need for high resolution image writing, e.g. 2400-2800 pixels per inch, dictates that the center-to-center spacing between adjacent beam spots on the photoreceptor surface be very close e.g. closer than the typical 50 to 125 µm diameter of the fibers. For example, a resolution of 2800 pixels per inch requires a spacing of 9.07 microns. Conventional, unmodified single-mode fibers are presently available with an 80 micron diameter and can be mounted on a substrate with a center-to-center spacing of 90 microns. If the light beams are projected directly onto the photoreceptor, as is described in the above patent, such a line head would write a comparatively low resolution image of about 280 pixels per inch. Multi-mode fibers are available with a diameter of 50 microns but even these would give a relatively low cross-scan resolution on the order of only 420 pixels per inch.

Various techniques for achieving the desired close spacing are known. One such technique involves tilting the head at an angle to the writing direction. However, for reasonable tilt angles, the fibers must be etched to reduce the diameter so as to increase the packing density of the fibers in the head. Fiber etching processes increase the cost of the head unduly and can introduce unwanted centration errors in the fibers. Moreover, only single-mode fibers, which have thick external cladding, can be etched. Multi-mode fibers, which have a much larger numerical aperture and very thin cladding, cannot be effectively etched.

For commercially available single-mode optical fibers for use in the 780-850 nm range, the concentricity of the core to the cladding is 1 µm or better. The ovality of the fiber is better than 2%, which could represent a 1.6 µm asymmetry in the concentricity of the core for 80 µm diameter fibers. This means that for perfect fiber placement in the silicon v-grooves, a 2.6 µm registration error from core to core can still be present due to variations in optical fibers. For high resolution, high precision printing, an error of 1/20 of a pixel is acceptable. For a 12 µm pixel spacing, the acceptable error is 0.6 µm or less. From this example, it can be seen that optical fibers placed in silicon v-grooves cannot routinely meet this criteria.

It is therefore an object of the present invention to provide an optical print head having closely spaced spots that is economical to produce. It is another object of the invention to provide an optical print head having fibers that do not need to be etched to reduce desired center-to-center spacing for high resolution image writing.

### Summary of the Invention

The objects are achieved according to the present invention by providing a substrate having formed therein a plurality of optical channel waveguides. The waveguides are formed in a fanned out pattern. At the fanned out ends of each of the waveguides there is coupled an optical fiber for transmitting light to the channel waveguide. The optical fibers are each mounted in a v-groove that is etched into another substrate. The center of each of the v-grooves corresponds to the center of each of the respective channel waveguides. The two substrates are butted to each other and affixed in place with an adhesive to form an integrated print head.

In a preferred embodiment of the invention, the fibers are 80 µm diameter single-mode fibers placed into v-grooves on the second substrate at 90 µm centers. The channel waveguide is a glass substrate with the waveguides formed by silver ion exchange. The output spacing of the fan shaped pattern of waveguides is 12 µm.

### Brief Description of the Drawings

Figure 1 is a perspective view of an optical print head according to the present invention, and

Figure 2 is a partial cross sectional view taken along line 2-2 in Figure 1.

### Modes of Carrying Out the Invention

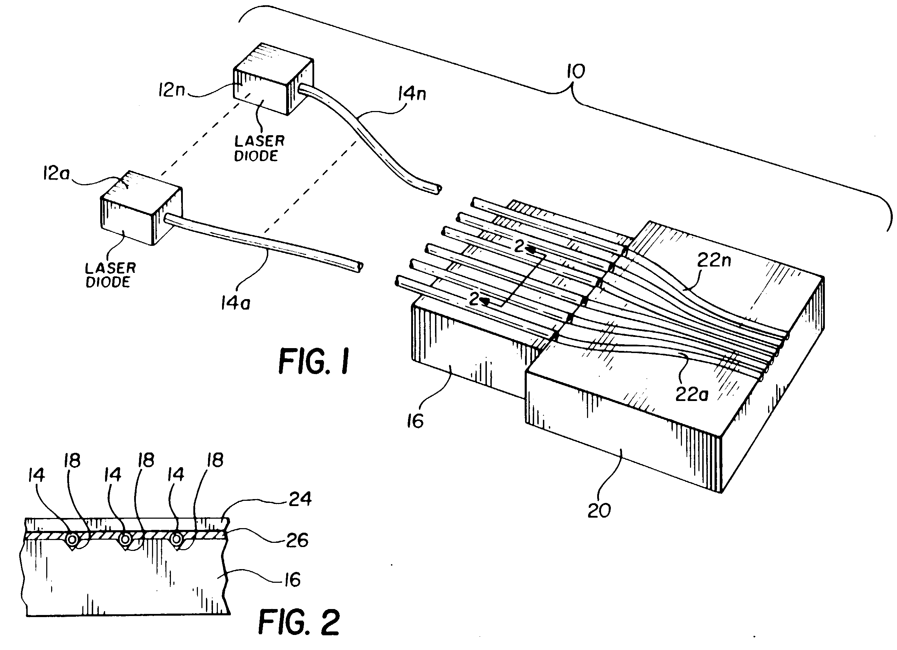

Referring to Fig. 1, an optical print head according to the present invention is generally designated 10. The print head includes a plurality of individually modulatable high intensity light sources, such as laser diodes 12 a-n. The output of each laser is coupled into an optical fiber 14 a-n. The optical fibers 14 a-n are held in spaced apart relation by a substrate 16 defining v-grooves 18 (see Fig. 2) in which the fibers 14 are positioned. A second substrate 20 defines a plurality of channel waveguides 22 a-n. The channel waveguides define a fanned out pattern having a widely spaced end and a narrowly spaced end. The widely spaced end of the channel waveguides is butted against the ends of the spaced apart fibers 14 a-n in the first substrate 16 such that each fiber is aligned with one of the channel waveguides. The fan shaped waveguide pattern 22 a-n receives the light emerging from the ends of spaced apart fibers 14 a-n and emits the light in a more narrowly spaced pattern at the narrow spaced end of the waveguide.

In operation, the light from the narrowly spaced end of the channel waveguide is employed to expose or activate a photosensitive receiver to produce an image. For example, the print head may be employed in a drum scanner with the print head in close proximity to a photosensitive medium carried on the drum. As the drum rotates, the light from the narrow end of the channel waveguide pattern simultaneously exposes a plurality of pixel modulated lines on the photosensitive medium. A carriage mechanism, not shown, translates the write head in a direction parallel to the axis of rotation of the drum scanner to expose a two-dimensional image on the photosensitive medium. Since the fibers 14 a-n can be gathered into a flexible bundle, the only portion of the print head that needs to be translated is the portion including substrate 16 and 20, thereby resulting in the need to accelerate only a relatively low mass.

In a preferred embodiment of the invention, a drum scanner such as the Eikonix Designmaster'" (sold by Eastman Kodak Company, Rochester, New York) laser beam recorder which is used to expose photographic film can be modified to expose either film or an electrophotographic photoreceptor, the laser diodes are Seastar Optics Model 300 pig tailed laser diodes with a wavelength of approximately 790 nm and a peak power of 8 milliwatts, the single-mode optical fibers are Corning Flexcor-850™ with a cladding diameter of 80 microns, the substrate is 0.040" thick silicon with v-grooves formed on 90 micron centers by using the process of patterning a native oxide etch mask on the (100) silicon wafer and photolithographically patterning the grooves in photoresist with a electron beam generated photomask such that the grooves are parallel to the (110) axis. A CHF₃ plasma is then used to remove the native oxide by reactive ion etching through these openings in the photoresist. The silicon wafer is then etched in an etchant consisting of 8 ml water, 17 ml ethylenediamine, and 3 grams of pyrocatechol. This etchant was used at an elevated temperature. This etchant rapidly etches silicon except along the (111) axis where the etch rate is much less than that of silicon of other orientations and the native oxide used as the etch mask. This forms precise v-grooves formed by the (111) silicon planes.

The fibers are secured in the v-grooves by placing a thin glass plate 24 on top of the fibers and then allowing capillary action to fill the gap between the glass plate and the wafer with an adhesive 26 such as Epo-Tek 301 adhesive. The fibers are clamped in place and the adhesive cured at 65°C for one hour. A semiconductor dicing saw is then used to trim and true and end of the head. The head is then hand polished in a lapping fixture by using successively finer grits of mylar backed alumina lapping films to finish up on 0.3 micron grit size to produce a polished surface.

The glass waveguides are formed by using an ion exchange process to exchange the sodium ions in standard BK-7 optical glass with silver ions. The silver ions increase the index of refraction of the glass. Waveguides are formed through selective ion exchange. A pattern is formed on the polished BK-7 substrate by first evaporating an aluminum layer 0.14 micron in thickness. Openings are formed in the aluminum by using conventional photoresist, photolithography, and chemical etching processes. The patterned substrate is preheated to 330°C then slowly immersed in a 330°C bath of 5 molar % silver nitrate for 40 seconds. The waveguides are then annealed at 500°C in air for 10 minutes and slowly cooled. The waveguides are cut to final size on a diamond saw and polished one Logitech PM2A polishing system which insure sharp corners on the edge of the waveguides.

Next, the waveguides are attached to the fiber array. A Dymax 628T µv cure adhesive is used. To insure optimal adhesion, a thin (0.040 micron) film of chrome is evaporated onto the non-active areas of the waveguide and a fiber array. The fiber array then held in a six axis micropositioner. A thin layer of the adhesive is applied to the waveguide and the waveguide is actively aligned with the fiber array by powering the lasers and observing the light emitted from the waveguide. The relative position of the filter optic array and the waveguide are adjusted in the micropositioners until the output power from the waveguide is optimized. When the output power has been optimized, the adhesive is cured by irradiating it with a Dymax Light-Welder ^{TM}. By irradiating the adhesive uniformly, no misalignment occurs between the fiber array and the waveguide due to shrinkage of the adhesive during cure. This simple butt joint holds the waveguide directly against the fiber array. In this way, changes in temperature have essentially no effect on the alignment of the waveguide to the fiber array due to any differential thermal expansion between the glass and the silicon that may occur.

The fan shape pattern consist of precise stripes of a width between 4 and 5 microns of 90 micron centers at the wide end and 12.8 micron centers at the narrow end. The mask used to pattern these waveguides is an electron beam generated mask which provides a non-cumulative registration tolerance of 0.05 microns. The optical print head described above is designed to be used inclined at a 45° angle to print at 2800 DPI. 2800 DPI printing is also achievable without inclining the head at 45° by providing a spacing of 9.07 microns between the output channels in the waveguide. By simply changing the output spacing of the photomask used to pattern the waveguide other spacings are possible such as 10.6, 14.1, and 21.2 microns to produce 2400, 1800, and 1200 DPI (dots per inch), respectively. As described above, the non-cumulative registration tolerance for these spacings is 0.05 microns. For the highest resolution of 2800 dots per inch, this represents 0.05/9.07 or 0.55% or 1/200^{th} of a pixel. This is a factor a ten better the 1/20^{th} of a pixel which is typically specified for such a drum writer.

This invention is readily extendable to multi-mode fibers coupled to multi-mode waveguides. The fiber array is assemble in the same manner except that fibers with larger core diameters are used. In one embodiment, 125 micron diameter fibers with 50 micron cores are assemble in a fiber array on 150 micron centers. A fan pattern waveguide fabricated by using a field assisted ion exchange process to provide channel waveguide with core diameters of 50 x 50 microns or greater in order to match their core of the fibers. The fan pattern can then provide an output spacing of 65 microns.

The multi-mode fibers 14 a-n provide the additional advantage of mixing the modes from the lasers 12 a-n so that a more uniform light output is produced by the print head.

Alternatively, the channel waveguides 20 may be formed of diffused areas of Ti and the substrate 14 may be formed from a Z-cut of LiNbO₃ material. The channels are formed photolithographically using approximately 400 to 500 angstrons of Ti that is diffused at approximately 1025°C for approximately 8 hours.

Other materials may also be employed to construct the fan shaped pattern of channel waveguides, such as the photopolymer optical waveguide material sold as POLYGUIDE™ by the DuPont Co.

### Industrial Applicability and Advantages

Optical print heads according to the present invention are useful in the field of optical printing, and are advantageous in that the print heads produce spots having very narrow uniform spacing and the optical print heads may be easily fabricated.

## Claims

1. A multichannel print head comprising :
a plurality of light sources (12) ;
a corresponding plurality of optical fibers (14) defining input and output ends, each of said light sources being coupled to the input end of one of said fibers;
a first substrate (16) defining grooves for holding the output ends of said fibers in spaced apart relationship; characterized by :
a second substrate (20) having a corresponding plurality of channel waveguides (22) each of said plurality of channel waveguides having input and output ends, the input ends being spaced apart at the same spacing as said output ends of said fibers, and said output ends of said waveguides being spaced apart by a distance less than said input ends; and
said output ends of said fibers and said input of said channel waveguides being fixed in butting relationship such that said optical fibers are in alignment with and optically coupled to respective ones of said channel waveguides.

2. The multichannel print head according to claim 1, wherein said second substrate is glass, said waveguides being formed from an ion exchange of Ag with Na.

3. The multichannel print head according to claim 1, wherein said light sources are laser diodes.

4. The multichannel print head claimed in claim 1, wherein said optical fibres are single-mode fibers, and said waveguides are single-mode waveguides.

5. The multichannel print head claimed in claim 4, wherein said single-mode optical fibers are 80 µm in diameter, and said waveguides are strips having a width of between 4 and 5 µm, a spacing of 90 µm at the input end and a spacing of 12.8 µm at the output ends.

6. The multichannel print head claimed in claim 1, wherein said optical fibres are multi-mode fibers and said waveguides are multi-mode waveguides.

7. The multichannel print head claimed in claim 6, wherein said multi-mode fibers are 125 µm in diameter fibers with 50 µm diameter cores, and said multi-mode waveguides are channel waveguides with 50 x 50 µm cross section, a 150 µm spacing on the input end, and a 65 µm spacing on the output end.

## Patentansprüche

1. Mehrkanal-Druckkopf mit
einer Vielzahl von Lichtquellen (12),
einer entsprechenden Vielzahl von mit Eingangs- und Ausgangsseiten versehenen optischen Fasern (14), wobei jede Lichtquelle an die Eingangsseite einer der optischen Fasern angeschlossen ist, und
einem ersten Substrat (16) mit Kerben, die die Ausgangsseiten der Fasern im Abstand voneinander halten,
**dadurch gekennzeichnet**, daß
ein zweites Substrat (20) mit einer entsprechenden Vielzahl von Kanalwellenleitern (22) vorgesehen ist, die jeweils Eingangs- und Ausgangsseiten aufweisen, wobei die Eingangsseiten der Wellenleiter im selben Abstand voneinander angeordnet sind wie die Ausgangsseiten der Fasern und die Ausgangsseiten der Wellenleiter in einem geringeren Abstand voneinander angeordnet sind als die Eingangsseiten der Fasern, und daß
die Ausgangsseiten der Fasern und die Eingangsseiten der Wellenleiter derart aneinanderstoßend befestigt sind, daß die Fasern zu den entsprechenden Wellenleitern ausgerichtet und optisch gekoppelt sind.

2. Mehrkanal-Druckkopf nach Anspruch 1, dadurch gekennzeichnet, daß das zweite Substrat und die Wellenleiter aus Glas bestehen, wobei die Wellenleiter durch einen Ionenaustausch im Glas zwischen Ag und Na entstehen.

3. Mehrkanal-Druckkopf nach Anspruch 1, dadurch gekennzeichnet, daß die Lichtquellen Laserdioden sind.

4. Mehrkanal-Druckkopf nach Anspruch 1, dadurch gekennzeichnet, daß die Fasern Monomode-Fasern und die Wellenleiter Monomode-Wellenleiter sind.

5. Mehrkanal-Druckkopf nach Anspruch 4, dadurch gekennzeichnet, daß die Monomode-Fasern einen Durchmesser von 80 µm aufweisen und daß die Wellenleiter Bänder mit einer Breite von 4 bis 5 µm sind, die an der Eingangsseite einen Abstand von 90 µm und an der Ausgangsseite einen Abstand von 12,8 µm haben.

6. Mehrkanal-Druckkopf nach Anspruch 1, dadurch gekennzeichnet, die Fasern Multimode-Fasern und die Wellenleiter Multimode-Wellenleiter sind.

7. Mehrkanal-Druckkopf nach Anspruch 6, dadurch gekennzeichnet, daß die Multimode-Fasern einen Durchmesser von 125 µm und ihre Kerne einen Durchmesser von 50 µm aufweisen und daß die Multimode-Wellenleiter Kanalwellenleiter mit einem Querschnitt von 50 x 50 µm sind, die an der Eingangsseite einen Abstand von 150 µm und an der Ausgangsseite einen Abstand von 65 µm haben.

## Revendications

1. Tête d'impression multicanal comprenant : une pluralité de sources lumineuses (12) ; une pluralité correspondante de fibres optiques (14) définissant des extrémités d'entrée et de sortie, chacune desdites sources lumineuses étant couplée à l'extrémité d'entrée de l'une desdites fibres ; un premier substrat (16) définissant des rainures destinées à maintenir les extrémités de sortie desdites fibres espacées les unes des autres ; caractérisée par : un second substrat (20) ayant une pluralité correspondante de canaux guides d'ondes (22), chaque guide d'ondes ayant des extrémités d'entrée et de sortie, les extrémités d'entrée étant espacées les unes des autres de la même manière que lesdites extrémités de sortie desdites fibres, et lesdites extrémités de sortie desdits guides d'ondes étant espacées les unes des autres par une distance inférieure à celle séparant lesdites extrémités d'entrée ; et lesdites extrémités de sortie desdites fibres et ladite entrée desdits canaux guides d'ondes étant fixées bout à bout de sorte que lesdites fibres optiques sont alignées et optiquement couplées avec les fibres respectives desdits canaux guides d'ondes .

2. Tête d'impression multicanal selon la revendication 1, dans laquelle ledit second substrat est en verre, lesdits guides d'ondes étant constitués à partir d'un échange d'ions d'argent (Ag) et de sodium (Na).

3. Tête d'impression multicanal selon la revendication 1, dans laquelle lesdites sources lumineuses sont des diodes laser.

4. Tête d'impression multicanal selon la revendication 1, dans laquelle lesdites fibres optiques sont des fibres monomodes et lesdits guides d'ondes sont des guides d'ondes monomodes.

5. Tête d'impression multicanal selon la revendication 4, dans laquelle lesdites fibres optiques monomodes ont un diamètre de 80 µm, et lesdits guides d'ondes sont des bandes ayant une largeur comprise entre 4 et 5 µm, un espacement de 90 µm au niveau de l'extrémité d'entrée et un espacement de 12,8 µm au niveau des extrémités de sortie.

6. Tête d'impression multicanal selon la revendication 1, dans laquelle lesdites fibres optiques sont des fibres multimodes et lesdits guides d'ondes sont des guides d'ondes multimodes.

7. Tête d'impression multicanal selon la revendication 6, dans laquelle lesdites fibres multimodes sont des fibres de 125 µm de diamètre ayant un coeur de 50 µm de diamètre, et lesdits guides d'ondes multimodes sont des canaux guides d'ondes ayant une section transversale de 50 x 50 µm, un espacement de 150 µm sur l'extrémité d'entrée, et un espacement de 65 µm sur l'extrémité de sortie.
